# EUROPEAN PATENT SPECIFICATION

(11) **EP 3 818 421 B1**
(45) Date of publication and mention of the grant of the patent: **22.06.2022**
(21) Application number: 19749729.0
(22) Date of filing: 07.08.2019
(51) Int. Cl.: G05B 19/418, H04L 41/0803

(54) **SYSTEM AND METHOD FOR REMOTELY MANAGING CONFIGURATION OF INDUSTRIAL MACHINES**
SYSTEM UND VERFAHREN ZUR FERNVERWALTUNG DER KONFIGURATION VON INDUSTRIEMASCHINEN
SYSTÈME ET PROCÉDÉ DE GESTION À DISTANCE DE LA CONFIGURATION DE MACHINES INDUSTRIELLES

(30) Priority: 07.08.2018 EP 18187752
(43) Date of publication of application: 12.05.2021
(73) Proprietor: Siemens Aktiengesellschaft, 80333 München (DE)
(72) Inventor: VERMA, Amit, 82024 Taufkirchen (DE)
(74) Representative: Isarpatent
(86) International application number: PCT/EP2019/071228
(87) International publication number: WO 2020/030698

(56) References cited:
- EP-A2- 2 846 208
- US-A1- 2005 188 268
- US-A1- 2014 189 086
- US-A1- 2017 329 315
- US-A1- 2018 035 572
- JAY LEE ET AL: "A Cyber-Physical Systems architecture for Industry 4.0-based manufacturing systems", MANUFACTURING LETTERS, vol. 3, 1 January 2015 (2015-01-01), pages 18-23, XP055542485, NL ISSN: 2213-8463, DOI: 10.1016/j.mfglet.2014.12.001

## Description

This invention relates to a method for managing configuration of a machine function of a first industrial machine which is connectable to a network system that comprises several other industrial machines. This invention also relates to a corresponding managing system for managing configuration of a machine function.

In cloud platforms for the industrial internet of things, there is an increasing trend of industrial automation systems, assets, machines, sensors, etc. being connected to the industrial internet of things cloud directly or via cloud gateways. Industrial assets such as printing machines, machine tools, industrial processes involve complex configuration settings that determine the operation and behaviour of these assets. A growing part of this configuration is software-defined configuration.

US 2014/0189086 A1 describes methods, systems, and computer storage media for detecting anomalies within nodes of a data centre. A self-learning system is employed to proactively and automatically detect the anomalies using one or more locally hosted agents for pulling information that describes states of a plurality of nodes. A comparison technique is applied that includes comparing a state information of the plurality of the nodes against one another. Based upon the comparison, grouping one or more nodes of the plurality of nodes into clusters that exhibit substantially similar state information. Upon identifying the clusters that include low number of nodes grouped therein, with respect to a remainder of the clusters of nodes, the members of the identified clusters are designated as anomalous machines.

US 2017/0329315 A1 describes an information processing apparatus for processing machining information so that the machining information is sharable between a plurality of manufacturing cells each including a plurality of machines.

The information processing apparatus includes a plurality of dedicated data storage units, a common data storage unit, a configuration information management unit, a data conversion unit and a common data management unit. The plurality of dedicated data storage units are units in which machining information to be set for each of the machines is stored as dedicated data for that machine. The common data storage unit is a unit in which machining information that is common to the plurality of manufacturing cells is stored as common data.

Any errors in configuration of these complex assets are difficult to detect and to troubleshoot. Very often this leads to costly visits by the service personnel of the Original Equipment Manufacturer (OEM) of the machine to the end customer. The resulting downtime of the machine often leads to production losses. If furthermore some of these assets or machines are sub-optimally configured the production process may not be optimal and the maintenance and lifecycle management of these machines may not be optimized.

Very often there is a recommended configuration of a machine that is provided by an original equipment manufacturer (OEM). If any configuration errors are suspected during the operation of a machine, the configuration is compared with the recommended configuration of the OEM and then the configuration is rectified. This comparison of configuration mostly happens manually or via an automated tool. Nowadays industrial machines can be used for a wide variety of use cases so that the master configuration from an OEM might not be the optimal configuration for different use cases. Moreover, the optimal configuration that is set for a machine can change during its lifecycle. It may be quite cost-intensive or inconvenient if every single industrial machine has to be checked by the service personnel.

In many use cases it is quite difficult or time-consuming and unreliable to detect industrial machines that are not configured optimally.

The object of the present invention is to provide a method and system that improve the reliability of the configuration of a machine function of an industrial machine .

This object is solved by a method according to the independent claim 1 and a system of the independent claim 10. Advantageous embodiments and improvements of the invention are presented in the dependent claims.

Hereinafter, up to the brief "description of the drawings", details are described which contribute to the understanding of the invention:
A network system can be formed as a cloud system. This cloud system for example can be an industrial internet of things cloud system. Industrial machines can be machines that are used for manufacturing processes. A welding robot for example can be such an industrial machine.

In a step a) a set of second industrial machines from said several other industrial machines is identified based on a predetermined feature of the first industrial machine in the several other industrial machines. The idea is not to analyse one single industrial machine without considering other industrial machines. It is intended to consider other industrial machines that are comparable concerning the machine function that shall be analysed. In other words the second industrial machines shall be similar to the first industrial machine at least concerning the machine function that shall be analysed.

To do this the predetermined feature of the first industrial machine is identified in the several other industrial machines. If for example the machine function is "displaying time" generally all industrial machines that are able to show time can be added to the set of second industrial machines. Of course there can be other industrial machines that do not comprise the machine function "displaying time". This can be air-conditioning machines for example that do not have a time function. In this case the first industrial machine and the set of second industrial machines only contain industrial machines that at least comprise the machine function "displaying time". Depending on the predetermined feature the set of second industrial machines may be composed differently.

In a step b) a first configuration value is retrieved and/or created, which relates to the machine function of the first industrial machine and a second configuration value, which relates to the machine function of the second industrial machines. It is also possible that several first configuration values relate to the machine function of the first industrial machine. Analogously, this is also valid for several second configuration values of the second industrial machines. This means that several configuration values can describe a machine function. The machine function itself can be quite general and it can be divided into several sub-functions. In this case every first or second configuration value can relate to the corresponding sub-function of the machine.

For example if the machine function is described as "heat management", several sub-functions may be possible. One sub-function may be the dimensions of heating elements, another sub-function may be a current that is used for the heating elements, or a surface temperature of the industrial machine. In this case the machine function "heat management" splits up into several sub-functions. It is possible that one single first or second configuration value is created for the machine function and/or several first or second configuration values, wherein each configuration value can relate to the sub-function of the machine function.

Each configuration value represents a configuration of the machine function of the first industrial machine or one of the second industrial machines. This means that each configuration value does not relate to several industrial machines. One single configuration value represents either the machine function of one single industrial machine or the sub-function of this machine function. This industrial machine can be the first industrial machine or one of the second industrial machines. It is not possible that the first configuration value relates to a machine function of one of the second industrial machines. The second configuration value can relate to the machine function or sub-function of one of the second industrial machines.

Analogously a second configuration value does not relate to a machine function of the first industrial machine. Preferably one single first configuration value or several first configuration values relate to one single first industrial machine. Nevertheless the first configuration value may refer to the machine function, which itself can contain several sub-functions. The same is analogously true for the second configuration values. Preferably the several second configuration values are arranged to form several second vectors or matrices. In the case of the machine function "heat management" the first industrial machine may be assigned one single first configuration value or one single first configuration vector. In this case the first configuration value relates to the machine function "heat management". This first configuration value does not consider different sub-functions in this case.

This patent application uses the terms "configuration value", "configuration vector" and "configuration matrix". The configuration matrix can be composed of several configuration vectors. A configuration vector can be composed of several configuration values. At the extreme a configuration vector can only comprise one single configuration vector and a configuration matrix can comprise one single configuration vector. In this case the terms, "configuration value", "configuration vector" and "configuration matrix" mean the same. The term configuration value can be extended to the term configuration vector or vice versa. The same is true for the term configuration matrix. The principle remains the same, only the calculations may get more complicated.

In a step c) a deviation value of the machine function of the first industrial machine is determined depending on a relation of the first configuration value of the first industrial machine to the second configuration value of the set of second industrial machines. Also in this step several first configuration values and several second configuration values can be applied. In this case the several first configuration values preferably refer to different sub-functions that are part of the machine function. The relation of the first configuration value to the second configuration value may be a simple comparison or a complex analysis. It is only relevant that the deviation value is somehow determined on the basis of the first configuration value and the second configuration value. The second configuration value may be representing an average configuration value of all second industrial machines. It is also possible that every second industrial machine has its own second configuration value.

In this case the deviation value can be determined by considering the first configuration value and the several second configuration values. In the case if a machine function is split up into several sub-functions also several first configuration values and several second configuration values may be considered for the determining of the deviation value of the machine function of the first industrial machine. In every situation the deviation value is not determined only by considering the first configuration value and no second configuration value. In any situation at least one first configuration value and at least one second configuration value is considered for determining the deviation value.

In a step d) a misconfiguration of the first industrial machine is detected based on a comparison of the deviation value with a predetermined threshold value. The deviation value of step c) is compared with a predetermined threshold value for detecting the misconfiguration of the first industrial machine. Also this step can be extended to several deviation values. In this case each sub-function of the machine function can be associated with a corresponding deviation value. In this case every deviation value can be assigned to a corresponding sub-function of the machine function. These several deviation values can be combined to one single deviation value as an end result. Nevertheless in case of several deviation values each deviation value can be compared with a corresponding threshold value. This means that in this case several threshold values can be predetermined. Each deviation value can be compared with its corresponding threshold value.

This method offers an automatic method to detect a misconfiguration of an industrial machine. The method can be implemented into an algorithm which can scan a huge amount of industrial machines. For example if thousands of industrial machines shall be analysed, this method can effectively figure out which industrial machines have a misconfiguration or are not configured optimally. In this case the service personnel does not need to check every single industrial machine. The service personnel can focus on the detected misconfigured industrial machines. It may be sufficient, if only the misconfigured machines are further analysed, that are detected by this method. This can prevent an unnecessary downtime of the industrial machines and further prevent production losses.

There is also a method, wherein each configuration value is assigned to a configuration vector and each configuration vector comprises the configuration value concerning a single industrial machine, which is either the first industrial machine or one of the second industrial machines. It is possible that the configuration vector only contains one or more configuration values of a single industrial machine. This method can be regarded as "vectorization of the machine function". Usually several configuration values for each industrial machine are to be analysed. It can be very efficient to combine several first or second configuration values to a corresponding configuration vector or configuration matrix. For example all first configuration values that relate to the machine function of the first industrial machine can be combined to a first configuration vector. Analogously the second configuration values can be combined to a second configuration matrix or a second configuration vector. Since the second industrial machines contain several machines, it is often useful to apply several second configuration vectors.

Alternatively the several second configuration vectors can be combined to one single second configuration matrix. In this case preferably every configuration vector refers to one single industrial machine of the second industrial machines. The steps c) and d) are correspondingly performed by using configuration vectors instead of configuration values. The vectorization of the configuration values can further improve the determining of the deviation value and the detecting of the misconfiguration of the first industrial machine.

Step c) can comprise a comparison of the configuration vector of the first industrial machine to the other configuration vectors of the second industrial machines. This comparison can be a simple subtraction of the first configuration vector with each of the other second configuration vectors. Preferably, the subtraction is performed several times according to the quantity of the second industrial machines. Each subtraction can create a result that can be further processed into an end result.

Preferably the first configuration vector contains configuration values of the first industrial machine and analogously the second configuration vectors contain the second configuration values. Instead of a simple subtraction also a complex vector analysis can be applied to determine the deviation value of the machine function of the first industrial machine. The comparison of different configuration vectors can be regarded as an extension to the original step c). In this regard, several configuration values that are combined to a configuration vector can be considered for determining the deviation value. If the comparison is designed as a simple subtraction the comparison can easily be performed and does not consume a lot of digital resources.

There is also a method, wherein the predetermined feature of the first industrial machine to identify the set of second industrial machines is based on metadata of the first industrial machine. Metadata can describe an industrial machine generally. For example the name of the manufacturer of the industrial machine and its main purpose may classify the first industrial machine. In this case several pieces of information can form the metadata. This means the metadata can comprise one single piece of information or several pieces of information. Preferably all second industrial machines match the first industrial machine according to the metadata. For example if the metadata contain the pieces of information ABC as the name of the manufacturer and the main function "welding" then all industrial machines should be machines from the manufacturer ABC and these machines should be welding machines. If the metadata contained further pieces of information, then the quantity of the second several machines could be further limited.

The definition of the metadata or the predetermined feature mostly directly influences the quantity of the second several industrial machines. This means that the quantity of the second industrial machines can be influenced by the predetermined feature of the definition of the metadata. For example if only very few specific industrial machines shall be analysed usually the metadata contain several different pieces of information. For example if further only indoor industrial machines shall be analysed, the metadata can further contain the information "indoors". With respect to the mentioned example only industrial machines that are ABC machines, welding robots and located indoors would be assigned to the second industrial machines. This allows a target-orientated analysis of industrial machines. The method for detecting the misconfiguration can be performed depending on different requirements or specifications.

There is also a method, further comprising transforming a non-numerical first or second configuration value referring to a non-numerical machine function into a numerical value in step b), in particular by assigning the non-numerical value configuration value to a binary value or a predetermined numerical value, for determining the deviation value in step c) .

There is also a method, wherein a normalized value for the first or second configuration value is calculated if the underlying machine function is a numerical type of configuration. This means the first or second configuration value are not an absolute value but a normalized value. Preferably the normalized value considers the first and second configuration values. In particular the normalized value is formed as a reference value. Preferably the reference value considers the first and second configuration values. In some cases a normalized value may be better than an absolute value. For example the current of a welding machine shall be expressed by a normalized value. In this case the welding current of the first industrial machine can be expressed relative to the maximum current, which is available at the first industrial machine or one of the second industrial machines.

If for example the first industrial machine uses a welding current of 50 A and a maximum welding current at another industrial machine would be 100 A, then the normalized value would be 50 % or 0.5. It is also possible to calculate the normalized value by another method. For example a ratio containing the first configuration value, the maximum and minimum configuration value can be used. The following ratio value of first industrial machine divided by difference of maximum value and minimum value can be used as normalized value. This means that normalized values are especially reference values that consider the other industrial machines. This means that a normalized value already contains information about at least one other machine than the first industrial machine.

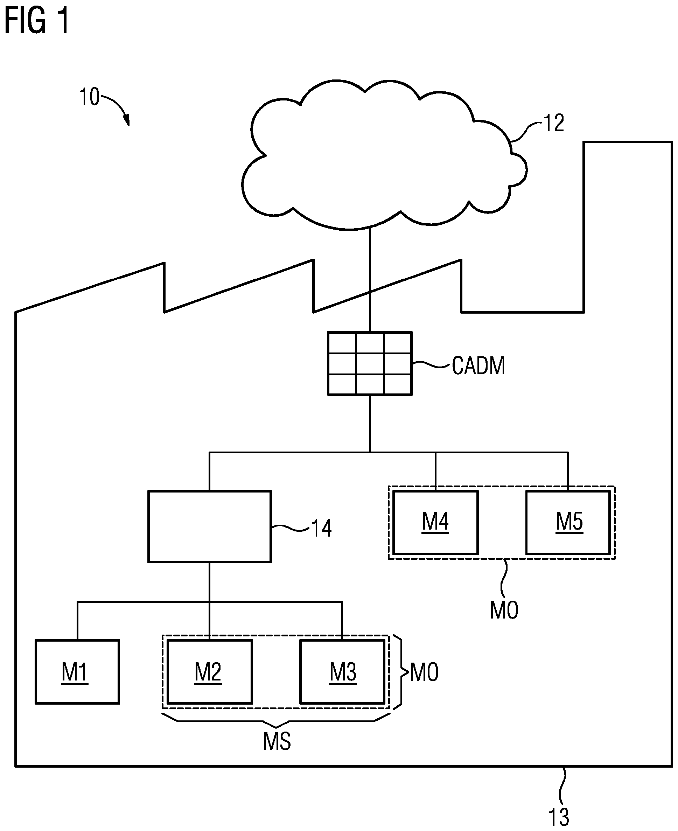

There is also a method, wherein the first or second configuration value is a binary value if the underlying machine function is a binary type of configuration. A binary type of configuration usually offers two different possible states of options. The industrial machine can have two different states. It can be switched on or off for example. An example for a binary value would be 0 or 1. 0 for example could refer to an industrial machine that is switched off. The binary value 1 can refer to an industrial machine that is switched on. Also other binary configurations can be described by the binary value. In most cases the figures 0 and 1 are used but of course also other figures can be applied. A binary value is usually easy to evaluate and therefore this can improve the detection of the misconfigured industrial machine.

There is also a method, wherein the configuration value is a numerical value even if the underlying machine function is a non-numerical type of configuration. The method aims at determining the deviation value of the machine function of the first industrial machine. Therefore it is suitable to ensure that each configuration value is of a numerical type. Nevertheless, some configuration settings may be of a non-numerical type.

In this method also for non-numerical type of configuration settings numerical values can be created and assigned to the non-numerical type of configuration. A non-numerical type of configuration for example would be the connection type of the industrial machine to other industrial machines. For example the first industrial machine can be connected to other industrial machines via a CAN-BUS, a MOD-BUS, OPC, Bluetooth or other type of connections. For determining the deviation value it is very advantageous to assign numbers to these different types of connections. For example the number 1 can be assigned to a connection type MOD-BUS, the number 2 can be assigned to the connection type OPC, number 3 can be assigned to the CAN-BUS connection and the number 4 can be assigned to the Bluetooth connection. In this case the configuration value 4 indicates that the corresponding industrial machine is connected to other industrial machines via a Bluetooth connection. Analogously a configuration value of 3 would stand for a CAN-BUS connection.

There is also a method, wherein the configuration value is a standard deviation value if the underlying machine function is a numerical type of configuration. In this case the standard deviation value can directly indicate a deviation of the configuration value with respect to a mean configuration value. Large deviations can easily be identified by applying a standard deviation value as configuration value.

There is also a method, wherein step c) comprises determining a separate deviation value for each first configuration value of the machine function of the first industrial machine depending on the relation of said each first configuration value of the first industrial machine with its corresponding second configuration value of the second industrial machines. The main difference to step c) of claim 1 is that for each first configuration value a separate deviation value is determined. This means in particular that several deviation values can be determined. If several first configuration values are present, also several separate deviation values are determined.

Each separate deviation value can indicate a deviation of the corresponding first configuration value. If the machine function is split up in several sub-functions every sub-function can be described by the corresponding configuration value. Furthermore every sub-function can be independently analysed since every sub-function can be assigned to another separate deviation value. This means that with respect to the first industrial machine each deviation value can be assigned to a sub-function that is described by the corresponding first configuration value. Preferably each separate deviation value considers the second configuration values or second configuration vectors. By determining separate deviation values the method for detecting a misconfiguration of an industrial machine can be further refined. This means that several machine functions can be analysed more in detail.

There is also a method, wherein detecting the misconfiguration of the machine function of the first industrial machine in step d) comprises a comparison of each deviation value with a predetermined threshold value for identifying the misconfiguration that causes the misconfigured machine function of the first industrial machine. For example each separate deviation value can be compared with a separate predetermined threshold value for identifying the misconfiguration that causes the misconfigured machine function of the first industrial machine. This means that not only several separate deviation values can be determined, furthermore additionally several separate threshold values can be predetermined.

Therefore, There is also a method, wherein the misconfiguration of the machine function associated with the first industrial machine is detected if each separate deviation value is greater than a corresponding predetermined threshold value. This can help to identify the misconfiguration correctly.

Moreover it is possible that each separate deviation value can be compared to its corresponding separate predetermined threshold value. Depending on which separate deviation value exceeds the corresponding separate predetermined threshold value the misconfiguration that causes the misconfigured machine function of the first industrial machine can be identified. This means that not only the fact that there is a misconfigured machine can be identified, furthermore even the misconfiguration that causes the misconfigured machine can be identified.

For example a sub-function of a machine that is not optimally configured can be identified by applying the method. This further refines the method of detecting misconfigured industrial machines. Due to this refinement not only the misconfigured machine can be identified, moreover even the misconfigured machine function of the industrial machine can be identified. For example if all industrial machines should be connected via Bluetooth with each other a configuration value of the upper example of one or two would indicate a misconfigured industrial machine. Furthermore the deviation of the desired value (Bluetooth) is assigned to value 4 which indicates that the first industrial machine is misconfigured, since it comprises another connection configuration than Bluetooth. Therefore that industrial machine and the misconfigured machine function can be nominated and with these pieces of information a service personnel of industrial machines can easily correct the configurations of the first industrial machine.

There is also a method, wherein a Euclidian distance from the configuration vector of the first industrial machine to all second industrial machines is calculated for determining the deviation value in step c). If several deviation values differ from its corresponding threshold value, the Euclidian distance can generate an overall quantity of deviation. This can help to assess the misconfiguration better.

There is also a method, wherein in step c) a k-nearest neighbours analysis, a Support Vector Machine analysis, a neural network and/or a correlation based analysis are applied to the configuration values of step b) for determining the deviation value. These different types of analyses can be regarded as different methods of anomaly detections.

The k-nearest neighbours analysis can be regarded as a non-parametric method that can be used for estimating probability density functions. This method can be used for the purposes of classification. It also can be used for regression. In most cases the k-nearest neighbours method uses k- closest training examples in the features base. The output of this analysis usually depends on whether the k-nearest neighbours analysis is used for classification or regression. If the k-nearest neighbours analysis is a classification, the output is often a class membership. An object can be classified by a majority vote of its neighbours, with the object being assigned to a class most common among its k-nearest neighbours. The k-nearest neighbours analysis can be regarded as an instance-based learning or as a lazy learning method. The k-nearest neighbours analysis aims to find out if the configuration vector or the first and second configuration values appear to be anomalous with respect to the other configuration vectors or values. This means that the k-nearest neighbours analysis can be used to identify whether the configuration vector or the first configuration values of the first industrial machine may be anomalous or unusual. Thereto the k-nearest neighbours analysis considers the second configuration values or the second configuration vectors in order to assess the configuration values of the first industrial machine. The k-nearest neighbours analysis is often associated with machine learning algorithms.

The support vector machine analysis is another type of machine learning method. The support vector machine analysis often uses a set of training examples, each marked as belonging to one or another category. In particular the support vector machine analysis tries to create a model that assigns new examples to the one category or the other category. The support vector machine model is often a representation of the examples as points in space, which are mapped in such a way the examples of the separate categories are divided by a clear gap that is as wide as possible. New examples can be mapped into that same space and predicted to belong to a category based on which side of the gap they fall.

The industrial machines can be split up into two categories by using the support vector machine analysis. The first category can contain industrial machines that are correctly configured and the second category can contain industrial machines that are misconfigured. A new industrial machine, in this case the first industrial machine, can be assigned to one of these two categories by applying the support vector machine analysis. In order to create these two categories the support vector machine analysis tries to construct a hyperplane that clearly separates the set of training examples. In this case the training examples would be the set of second industrial machines. In most cases the hyperplane is constructed in that way so that the nearest training data of any points of the training examples have the largest distance to the hyperplane. This can ensure that an effective hyperplane can be constructed that clearly separates the training examples into different categories.

In order to determine the deviation value also the neural network or a correlation based analysis can be applied. A correlation based analysis can show deviations from an average configuration value. Since the first industrial machine and all of the second industrial machines at least share one machine function, they can be regarded as similar concerning this machine function. A misconfigured machine for example would show a large deviation from the average configuration that results from the other industrial machines.

A neural network can be trained with different training examples or training data so that it can recognise misconfigured industrial machines autonomously. All these different methods or analyses can be used for detecting a misconfigured industrial machine. Furthermore these analyses or methods can also be able to find out which configuration is making the machine configuration abnormal.

There is also a method, wherein the method is triggered periodically and/or in the case that a new industrial machine is connected to the network system. If it is assumed that an industrial machine is not correctly configured, the method for detecting the misconfigured industrial machine can be triggered manually. It is also possible that this method can be performed periodically. For example the method for detecting a misconfigured machine can be implemented in an algorithm that searches for misconfigured industrial machines in the background. Especially in the case that a new industrial machine is connected it is useful to apply this method. In this case the method for detecting a misconfigured industrial machine would automatically be performed. This can help to ensure that a plurality of industrial machines is correctly configured.

There is also a managing system for managing configuration of a machine function. The managing system comprises a first industrial machine to be examined regarding a configuration of a machine function. This managing system also comprises several other industrial machines, wherein the first industrial machine is connectable to a network system comprising several other industrial machines. Preferably the industrial machines comprise an interface for a connection to the network system. Furthermore this managing system comprises a configuration anomaly detection module which is configured to identify a set of second industrial machines from said several other industrial machines based on a predetermined feature of the first industrial machine in the several other industrial machines.

Further this configuration anomaly detection module is configured to retrieve and/or to create a first configuration value, which relates to the machine function of the first industrial machine and a second configuration value, which relates to the machine function of the second industrial machines and to determine a deviation value of the machine function of the first industrial machine depending on a relation of the first configuration value of the first industrial machine to the second configuration value of the set of second industrial machines. The configuration anomaly detection module is configured to detect a misconfiguration of the first industrial machine based on a comparison of the deviation value with a predetermined threshold value. The explanations of the different method and details thereof are analogously valid for the managing system.

Usually each industrial machine comprises an interface for a connection to the network system. This means that they do not have to be connected to the network system all the time. For example an industrial machine can be temporarily connected to the network system. In this case the configuration values or configuration vectors can be extracted at a time when this industrial machine was connected to the network system. This data can be saved and used later on. Therefore it is not needed that the industrial machines are connected to the network system all the time. It is sufficient if the industrial machines have an interface for a connection to the network system. Once they are connected to the network system their configuration values or configuration settings can be extracted and used later.

There is also a managing system including the network system formed as a cloud system, in particular as an industrial internet of things cloud. It is difficult to differentiate the terms network system, cloud system and industrial internet of things cloud. Often a network system is mentally associated with a network of machines that are located in a building. If further industrial machines shall be connected to this network system that are not located in this building, often the term cloud system is used. If for example industrial machines in India and Europe are connected to a network system, the network system is often called cloud system. The term IoT represents the term internet of things. The term IIoT represents the term industrial internet of things. The internet of things is usually a network of physical devices, in this case several industrial machines. The several industrial machines are able to connect with each other and they can exchange data. This means that the several industrial machines can form a cloud system. Since these machines are industrial machines the IoT cloud becomes the IIoT cloud.

There is also a managing system that comprises a configuration database for retrieving the configuration value, an IoT agent, an IoT gateway, an agent management and/or an IoT database for operating the network system and/or a visualization module. This visualization module can indicate misconfigured industrial machines visually so that an operator can easily identify the misconfigured industrial machine. The IoT database can contain configuration values of industrial machines that are not connected to the IoT cloud system. The IoT gateway and IoT agent are used to operate the cloud system. These two modules can connect industrial machines to the cloud system. Preferably an IoT agent can connect a single industrial machine to the cloud system and an IoT gateway can connect several industrial machines to the cloud system.

There is also a computer program product with program code means, which are stored on a computer-readable medium to conduct the method of any one of the preceding claims if the computer program product is processed on a processor of an electronic control unit. The electronic control unit can be part of the configuration anomaly detection module.

Whilst the above relates to details which contribute to the understanding of the invention, the invention and its advantageous embodiments are described in more detail by the following figures and the following description. The figures describe possible examples of how this invention can be realised. These examples shall not limit the scope of this invention. They only show possible examples of this invention and of course different examples are also included in this invention.
- FIG 1: a sketch of a manufacturing unit that contains several industrial machines and a cloud system;
- FIG 2: another sketch of the managing system with several modules in the cloud system;
- FIG 3: method flowchart for managing configuration of an industrial machine.

FIG 1 shows a manufacturing unit 13 that contains several industrial machines M1-M5. M1 is the first industrial machine. M2 to M5 represent the several other industrial machines MO. The industrial machines M1 to M3 are connected to an IIoT cloud 12 via an IIoT gateway 14. The industrial machines M4 and M5 are directly connected to the IIoT cloud 12. The manufacturing unit 13 also comprises a configuration anomaly detection module CADM. The configuration anomaly detection module CADM can be implemented on a computing device in the manufacturing unit 13 or it can also be implemented in the IIoT cloud 12. The configuration anomaly detection module CADM is able to perform the method for detecting a misconfiguration of a machine function of an industrial machine. In this case, the first industrial machine M1 shall be examined.

In this example the first industrial machine M1 is a welding robot. In this case it is intended to examine several welding robots which have been manufactured by the same company. The company that has manufactured the welding robots can be for example ABC. The configuration anomaly detection module CADM can create three different classes of industrial machines. Therefore the two pieces of information (manufacturer ABC and application welding) are used to identify a set N of second industrial machines MS. N is of the numeric type and indicates how many industrial machines belong to MS. These second industrial machines MS are part of the several other industrial machines MO. Here the several other industrial machines MO contain the industrial machines M2 to M5. In this case the industrial machines M4 and M5 are not from the manufacturer ABC or they are not welding machines. In this case, the configuration anomaly detection module CADM would search for a misconfiguration in the machines M1 to M3. The industrial machines M4 and M5 would not be considered in this case. Of course this method can be extended to several hundred or several thousand industrial machines.

In the example of FIG 1 the machines M1 to M3 are welding robots from ABC that comprise a welding gun with six axes. These industrial machines M1 to M3 can be used to weld together certain pieces of a car body. The configuration anomaly detection module CADM can retrieve and/or create several configuration values or several configuration vectors that comprise the relevant configuration settings of these three industrial machines M1 to M3. It is possible that every configuration setting is extracted or only predetermined relevant configuration settings are created. In particular the configuration anomaly detection module can convert configuration settings into configuration values. The following table shows an example of several configuration settings of one of these three industrial machines.

**Table 1: Exemplary configuration data of an industrial machine with converted configuration values;**

| **Category** | **Name** | **Settings** | **Configu ration values** | **Type** |
|---|---|---|---|---|
| **Meta information** | Manufacturer | ABC | 7 | List; non-numerical |
| Type | | 6-axis | 6 | numerical |
| Payload | weight | 25 kg | 25 | numerical |
| Application | Working mode | welding | 14 | non-numerical |
| **Operational Settings** | Cycle time | 15 seconds | 15 | numerical |
| Max. welding current | 25 A | Linear | 25 | numerical |
| Welding voltage | 440 V | Linear | 440 | numerical |
| Max. angular displacement Axis 1 | 2.5 radians | Linear | 2.5 | numerical |
| Max. angular displacement Axis 2 | 1.5 radians | Linear | 1.5 | numerical |
| Max. angular displacement Axis 3 | 0.5 radians | Linear | 0.5 | numerical |
| Max. angular displacement Axis 4 | 0.25 radians | Linear | 0.25 | numerical |
| Max. angular displacement Axis 5 | 3.0 radians | Linear | 3.0 | numerical |
| Max. angular displacement Axis 6 | 2.8 radians | Linear | 2.8 | numerical |
| Max. acceleration Axis 1 | 3 radians/sq. seconds | Linear | 3.0 | numerical |
| Max. acceleration Axis 2 | 4 radians/sq. seconds | Linear | 4.0 | numerical |
| Max. acceleration Axis 3 | 2 radians/sq. seconds | Linear | 2.0 | numerical |
| Max. acceleration Axis 4 | 2 radians/sq. seconds | Linear | 2.0 | numerical |
| Max. acceleration Axis 5 | 2 radians/sq. seconds | Linear | 2.0 | numerical |
| Max. acceleration Axis 6 | 2 radians/sq. seconds | Linear | 2.0 | numerical |
| **Safety settings** | Safety mode | ON | 1 | Binary |
| Manual override | | OFF | 0 | Binary |
| **Network settings** | Config mode | SLAVE | 0 | List; non-numerical |
| OPC Server | | OFF | 0 | Binary |
| Protocol | connection type | MODBUS | 2 | List; non-numerical |

The first two columns of this table contain the category and the specific type of configuration setting. The third column contains a value that is not the configuration value that is used for determining the deviation value of the machine function of the first industrial machine. The fifth column indicates the type of the configuration.

By means of the fifth column the elements of the third column are converted to numeric elements. These numeric elements are displayed in the fourth column and represent the configuration values. Especially these configuration values are used for detecting the misconfiguration. For example the safety settings concerning the safety mode or the manual override can be converted to the figures 0 and 1. 0 would mean the term "off" and 1 would mean the term "on". Even if the type of configuration setting is a non-numerical type of configuration a numerical value can be assigned.

For example the term "SLAVE" in the "config mode" of the network settings can be assigned to the value 0. Also the category - in this case the network settings - can be assigned to a numerical value. This can be for example 4. In case of the safety setting this can be 3. Also the elements of the second column can be differentiated by applying corresponding figures. For example the "config mode" can be assigned to the figure 1, the OPC server can be assigned to number 2 and the element protocol can be assigned to number 3. In this example the figures 4, 1 and 0 would indicate that the "config mode" of the network settings would be a "SLAVE". According to this example the entire table 1 can be converted into numerical figures. In table 1 the application "welding" is assigned to the figure 14.

In this case the configuration anomaly detection module CADM recognises by means of the figure 14 the application "welding". This can be very useful when an automatic managing system 10 is used. This means that for each industrial machine several figures can be created that can be used for further processing by the configuration anomaly detection module. These figures and configuration values can be combined in a matrix. Preferably each industrial machine is assigned to its own matrix. This matrix can be regarded as configuration matrix.

According to the predetermined feature or the metadata as the predetermined feature table 1 can contain fewer elements. If table 1 is converted into numerical figures each element of this converted table represents a configuration value. In this case several configuration values can be combined to a configuration vector or to a configuration matrix. This means every single industrial machine can comprise a configuration vector or configuration matrix of its own. This configuration matrix or configuration vector can be created by the configuration anomaly detection module CADM by extracting the relevant data from the industrial machines or by retrieving these information that can be available in an IoT database 24.

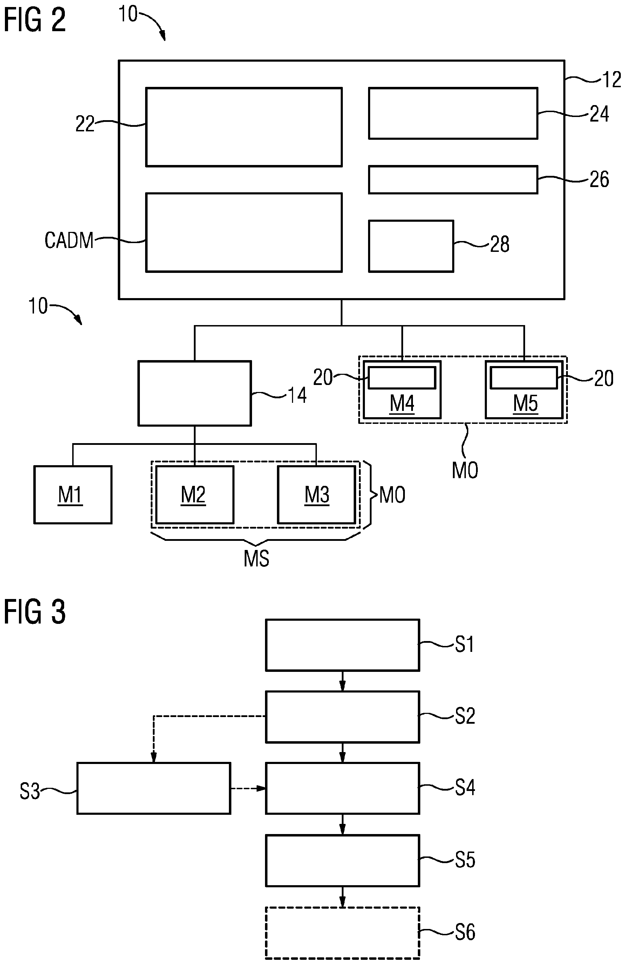

FIG 2 shows another example of the managing system 10. Three industrial machines M1 to M3 are connected to the IIoT cloud 12 via the IIoT gateway 14 as in FIG 1. The industrial machines M4 and M5 which belong to the several other industrial machines MO and which are not further analysed in this case are connected to the IIoT cloud 12 via an IoT agent 20. The IIoT cloud 12 comprises beside the configuration anomaly detection module CADM several other modules. The IIoT cloud 12 comprises an agent management 28, a visualisation module 26 and a machine configuration database 22. The machine configuration database 22 or the IoT database 24 can comprise configuration data or configuration settings of industrial machines that are currently not connected to the IIoT cloud 12. In this case the configuration anomaly detection module CADM can analyse these industrial machines that are not connected to the IIoT cloud 12 since their configuration data or settings are ideally stored in the machine configuration database 22 or the IoT database 24.

In this case the configuration anomaly detection module CADM is a module that can perform the relevant steps of this invention. The configuration anomaly detection module CADM can be any kind of digital resource. This may be a computer, a smartphone, a network of several computers, a cloud-server and so on. The machines M4 and M5 have an embedded IoT agent 20 that connects these machines to the IIoT cloud 12. The IoT agent 20 also can collect the configuration data of these industrial machines periodically or upon request and the IoT agent 20 can send these data to the IoT cloud 12. In FIG 2 the industrial machines M1 to M3 are connected to the IIoT cloud 12 via the IIoT gateway 14. The IIoT gateway 14 also can collect the configuration data or configuration settings of these industrial machines M1 to M3 and can send these data to the IIoT cloud 12.

In the following an example is described how the invention could work in this case. The following described steps are only representative and shall not to be considered to be limiting.

In a first step a request for an anomaly detection of the configuration of a machine is triggered. In this case the first industrial machine M1 shall be analysed regarding its configuration. A request for detecting a misconfiguration of the first industrial machine M1 can be triggered manually by an administrator or this request could be triggered as a result of an automated periodic assessment of the configuration anomaly detection module CADM. In particular this request can be triggered if a new industrial machine is connected to the IIoT cloud 12 that has not been part of the IIoT cloud 12 so far.

In the next step the IIoT gateway 14 that has access to the first industrial machine M1 determines the latest configuration parameters or configuration data of the first industrial machine M1 and send this data to the configuration anomaly detection module CADM in the IIoT cloud 12. This step could be bypassed if the configuration database in the IIoT cloud 12 already has the latest configuration data for the first industrial machine M1. The configuration anomaly detection module CADM can calculate the configuration values or the configuration vectors of the first industrial machine M1. Preferably several configuration values are summarized to a configuration vector or a configuration matrix.

Further on the configuration anomaly detection module CADM searches for the set N of similar machines. These similar machines are represented by the second industrial machines MS. To perform this, the configuration anomaly detection module CADM searches for industrial machines that correspond to the predetermined feature of the predetermined metadata. In this case the industrial machines M1 to M3 belong to the second industrial machines MS. This means that the three industrial machines M1 to M3 are taken into account for the detection of the misconfiguration of the first industrial machine.

In particular, the configuration anomaly detection module CADM calculates in the next step configuration values or configuration vectors for each industrial machine. In this case the first configuration vector can be calculated for the first industrial machine M1 and another two configuration vectors can be calculated for the second industrial machines MS (M2 and M3). Preferably each industrial machine has its own configuration vector or configuration matrix. The configuration vector is preferably generated by the configuration anomaly detection module CADM. The steps explained so far correspond to the steps a) and b) of claim 1.

In the next step the configuration anomaly detection module CADM can perform an anomaly detection. Therefore the first configuration vector that belongs to the first industrial machine M1 is analysed with respect to the other configuration vectors of the industrial machines M2 and M3. This anomaly detection can be performed by different analysis methods. For this analysis for example the k-nearest neighbours analysis, the support vector machine analysis, the neural network and/or the correlation based analysis can be used.

In the next step the configuration anomaly detection module CADM can provide the results of the last step to the visualization module 26. Preferably the anomaly detection analysis could not only detect the misconfigured machine, it further can indicate which configuration setting causes the misconfiguration of the industrial machine. This example can also be performed by analysing another industrial machine than the first industrial machine. An administrator or operator can use the result of the configuration anomaly detection module CADM displayed in the visualization module 26 in order to rectify the configuration setting of the first industrial machine. If no misconfiguration has been detected, no measure would be necessary.

FIG 3 shows an exemplary method flowchart of how a configuration of a first industrial machine (M1) can be managed. In step S1 preferably the set (N) of second industrial machines are identified.

This can happen by aligning metadata of the first industrial machine (M1) with metadata of the other industrial machines (MO). Those industrial machines (MO) whose metadata match the metadata of the first industrial machines can be identified as the second industrial machines (MS).

In the next step S2 the first configuration value of the first industrial machine can be retrieved. The second configuration value can be retrieved from the second industrial machines. Every single second industrial machine can be assigned to a separate configuration value or one single second configuration value for all second industrial machines can be created.

In the case that a configuration value is of a non-numerical type, this configuration value can be transformed in step S3 to a numerical value. For example a configuration value shall be the type of machine. This can be a welding robot for example. This machine type welding robot can be assigned to a numerical value. Other machines would be assigned to another numerical value. This step S3 is not necessary if the configuration value is already a numerical value. For example the maximum welding temperature would already be of numerical type. However, it can be useful to create a non-dimensional value. This can be a temperature value with reference to a maximum possible temperature for example.

In step S4 a deviation in the machine function can be determined. This depends on a relation of the first configuration value of the first industrial machine (M1) to the second configuration value of the set (N) of the second industrial machines (MS). The deviation is preferably determined by deviation values. Thereto different types of analysis can be applied.

For example all first configuration values can be bundled in a first configuration vector. All second configuration values can be bundled in a second configuration vector. These vectors can be used to determine a Euclidian distance between the first configuration vector and all second configuration vectors. Of course, other methods like Support Vector machine, k-nearest neighbours analysis, etc. can be applied to determine the deviation or the deviation values.

The misconfiguration of the first industrial machine can be detected in step S5. In this step, preferably the deviation value is compared with the predetermined threshold value. This comparison can include the comparison of several deviation values with several threshold values. In most cases if the deviation value exceeds its corresponding threshold value, the underlying or corresponding machine function is assigned to be misconfigured.

In a further step S6 a correction action can be performed. This step depends on the result of step S5. In the case of a misconfigured machine function of the first industrial machine (M1) the misconfigured machine function can be configured again or corrected so that the misconfiguration disappears. This correction can be performed remotely by using the network system or the cloud system.

It is also possible that the configuration anomaly detection module CADM generates a signal and sends it back to the IIoT gateway 14 in order to automatically modify the configuration settings of the first industrial machine M1. For example if the maximum welding current were too high, a signal could be generated that directly influences the configuration setting concerning the maximum welding current. In this case the configuration setting concerning the maximum welding current can be rectified with respect to a correct configuration value.

This possible example shows that a misconfiguration of an industrial machine or an anomaly of an industrial machine can be automatically detected and it can even be automatically rectified. The configuration anomaly detection module CADM preferably uses the configuration settings of the second industrial machines MS in order to detect problematic configurations. Beforehand the second industrial machines MS are extracted from the several other industrial machines MO. This is preferably achieved by matching the industrial machines to predetermined metadata. This invention describes how similar industrial machines can be vectorised concerning the configurations in an x-dimensional space. This results in several configuration vectors. These configuration vectors are preferably analysed by artificial intelligence methods in order to detect a misconfigured industrial machine and in the best case also the specific machine function that is not correctly configured.

Since the detection of a misconfigured industrial machine can be automated, configuration errors in complex industrial assets can be quickly detected. This invention can enhance the efficiency of application engineers and service personnel. Ideally this invention avoids production losses by detecting configuration errors in time and it can help to keep the configuration values optimal during the lifecycle of an industrial machine. The described method and examples show clearly that a misconfigured industrial machine can easily be detected without checking every single industrial machine manually. This can significantly simplify the maintenance of industrial machines. Moreover this invention offers potential to reduce downtime of industrial machines and to reduce production losses.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

## Claims

1. A computerized method for managing configuration of a machine function of a first industrial machine (M1) which is connectable to a network system that comprises several other industrial machines (MO) by performing the following steps:
a) identifying (S1) a set (N) of second industrial machines (MS) from said several other industrial machines (MO) based on a predetermined feature of the first industrial machine (M1) in the several other industrial machines (MO),
b) retrieving and/or creating (S2) a first configuration value, which relates to the machine function of the first industrial machine (M1), and a second configuration value, which relates to the machine function of the second industrial machines (MS), wherein:
- each configuration value represents a configuration of the machine function of the first industrial machine (M1) or one of the second industrial machines (MS),
c) determining (S4) a deviation value of the machine function of the first industrial machine (M1) depending on a relation of the first configuration value of the first industrial machine (M1) to the second configuration value of the set (N) of second industrial machines (MS), wherein determining the deviation value of the machine function of the first industrial machine (M1) comprises determining a separate deviation value for each first configuration value of the machine function of the first industrial machine (M1) depending on the relation of said each first configuration value of the first industrial machine (M1) with its corresponding second configuration value of the second industrial machines (SM),
d) detecting a misconfiguration of the first industrial machine (M1) based on a comparison of the deviation value with a predetermined threshold value, wherein detecting the misconfiguration of the machine function of the first industrial machine (M1) comprises comparing each deviation value with a predetermined threshold value for identifying the misconfiguration that causes the misconfigured machine function of the first industrial machine (M1), and
e) performing correction of the misconfigured machine function of the first industrial machine (M1) using a correct configuration value.

2. The method according to claim 1, wherein each configuration value is assigned to a configuration vector and each configuration vector comprises the configuration value concerning a single industrial machine, which is either the first industrial machine (M1) or one of the second industrial machines (MS).

3. The method according to any one of the preceding claims, wherein the predetermined feature of the first industrial machine (M1) to identify the set (N) of second industrial machines (MS) is based on metadata of the first industrial machine (M1).

4. The method according to any one of the preceding claims, further comprising transforming a non-numerical first or second configuration value referring to a non-numerical machine function into a numerical value in step b), in particular by assigning the non-numerical value configuration value to a binary value or a predetermined numerical value, for determining the deviation value in step c).

5. The method according to any one of the preceding claims, wherein the misconfiguration of the machine function associated with the first industrial machine (M1) is detected if each separate deviation value is greater than a corresponding predetermined threshold value.

6. The method according to claim 2, wherein a Euclidian distance from the configuration vector of the first industrial machine (M1) to all second industrial machines (MS) is calculated for determining the deviation value in step c) .

7. The method according to any one of the preceding claims, wherein in step c) a k-nearest neighbours analysis, a Support Vector Machine analysis, a neural network and/or a correlation based analysis are applied to the configuration values of step b) for determining the deviation value.

8. The method according to any one of the preceding claims, wherein the method is triggered, periodically and/or in the case that a new industrial machine is connected to the network system.

9. The method according to claim 4, wherein the transforming is based on a table including a first column with category meta information, a second name column, a third settings column, a fourth configuration value column and a fifth type column indicating the type of the configuration, wherein the elements of the third settings column are transformed to numeric values by means of the fifth type column.

10. A managing system (10) for managing configuration of a machine function comprising:
- a first industrial machine (M1) to be examined regarding a configuration of the machine function,
- several other industrial machines (MO), wherein the first industrial machine (M1) is connectable to a network system comprising the several other industrial machines, and
- a configuration anomaly detection module (CADM) which is configured to perform method according to any of the claims 1 to 9.

11. A computer program product with program code means, which are stored on a computer-readable medium to conduct the method of any one of the claims 1-9 if the computer program product is processed on a processor of an electronic control unit.

## Patentansprüche

1. Computergestütztes Verfahren zum Managen einer Konfiguration einer Maschinenfunktion einer ersten Industriemaschine (M1), die mit einem Netzsystem, das mehrere weitere Industriemaschinen (MO) umfasst, verbindbar ist, durch Durchführen der folgenden Schritte:
a) Identifizieren (S1) eines Satzes (N) zweiter Industriemaschinen (MS) aus den mehreren weiteren Industriemaschinen (MO) auf der Grundlage eines vorgegebenen Merkmals der ersten Industriemaschine (M1) in den mehreren weiteren Industriemaschinen (MO),
b) Abrufen und/oder Erstellen (S2) eines ersten Konfigurationswerts, der sich auf die Maschinenfunktion der ersten Industriemaschine (M1) bezieht, und eines zweiten Konfigurationswerts, der sich auf die Maschinenfunktion der zweiten Industriemaschinen (MS) bezieht, wobei
- jeder Konfigurationswert eine Konfiguration der Maschinenfunktion der ersten Industriemaschine (M1) oder eine der zweiten Industriemaschinen (MS) repräsentiert,
c) Bestimmen (S4) eines Abweichungswerts der Maschinenfunktion der ersten Industriemaschine (M1) abhängig von einem Verhältnis des ersten Konfigurationswerts der ersten Industriemaschine (M1) zum zweiten Konfigurationswert des Satzes (N) zweiter Industriemaschinen (MS), wobei das Bestimmen des Abweichungswerts der Maschinenfunktion der ersten Industriemaschine (M1) ein Bestimmen eines getrennten Abweichungswerts für jeden ersten Konfigurationswert der Maschinenfunktion der ersten Industriemaschine (M1) abhängig vom Verhältnis jedes ersten Konfigurationswerts der ersten Industriemaschine (M1) zum ihm entsprechenden zweiten Konfigurationswert der zweiten Industriemaschinen (SM) umfasst,
d) Detektieren einer Fehlkonfiguration der ersten Industriemaschine (M1) auf der Grundlage eines Vergleichs des Abweichungswerts mit einem vorgegebenen Schwellenwert, wobei das Detektieren der Fehlkonfiguration der Maschinenfunktion der ersten Industriemaschine (M1) ein Vergleichen jedes Abweichungswerts mit einem vorgegebenen Schwellenwert zum Identifizieren der Fehlkonfiguration, die die fehlkonfigurierte Maschinenfunktion der ersten Industriemaschine (M1) verursacht, umfasst, und
e) Durchführen einer Korrektur der fehlkonfigurierten Maschinenfunktion der ersten Industriemaschine (M1) unter Verwendung eines korrekten Konfigurationswerts.

2. Verfahren nach Anspruch 1, wobei jeder Konfigurationswert einem Konfigurationsvektor zugewiesen wird und jeder Konfigurationsvektor den Konfigurationswert bezüglich einer einzelnen Industriemaschine, die entweder die erste Industriemaschine (M1) oder eine der zweiten Industriemaschinen (MS) ist, umfasst.

3. Verfahren nach einem der vorhergehenden Ansprüche, wobei das vorgegebene Merkmal der ersten Industriemaschine (M1) zum Identifizieren des Satzes (N) zweiter Industriemaschinen (MS) auf Metadaten der ersten Industriemaschine (M1) basiert.

4. Verfahren nach einem der vorhergehenden Ansprüche, das ferner ein Umwandeln eines nicht numerischen ersten oder zweiten Konfigurationswerts unter Bezugnahme auf eine nicht numerische Maschinenfunktion in einen Zahlenwert in Schritt b) insbesondere durch Zuweisen des Konfigurationswerts mit nicht numerischem Wert zu einem Binärwert oder einem vorgegebenen Zahlenwert zum Bestimmen des Abweichungswerts in Schritt c) umfasst.

5. Verfahren nach einem der vorhergehenden Ansprüche, wobei die Fehlkonfiguration der Maschinenfunktion, die der ersten Industriemaschine (M1) zugeordnet ist, detektiert wird, wenn jeder getrennte Abweichungswert größer als ein entsprechender vorgegebener Schwellenwert ist.

6. Verfahren nach Anspruch 2, wobei ein euklidscher Abstand des Konfigurationsvektors der ersten Industriemaschine (M1) zu allen zweiten Industriemaschinen (MS) zum Bestimmen des Abweichungswerts in Schritt c) berechnet wird.

7. Verfahren nach einem der vorhergehenden Ansprüche, wobei in Schritt c) eine Analyse k nächster Nachbarn, eine Support-Vektor-Maschinen-Analyse, ein neuronales Netz und/oder eine korrelationsbasierte Analyse auf die Konfigurationswerte eines Schritts b) zum Bestimmen des Abweichungswerts angewendet werden.

8. Verfahren nach einem der vorhergehenden Ansprüche, wobei das Verfahren regelmäßig und/oder dann, wenn eine neue Industriemaschine mit dem Netzsystem verbunden wird, ausgelöst wird.

9. Verfahren nach Anspruch 4, wobei das Umwandeln eine Tabelle als Grundlage verwendet, die eine erste Spalte mit Kategoriemetadaten, eine zweite Namenspalte, eine dritte Einstellungsspalte, eine vierte Konfigurationswertspalte und eine fünfte Typspalte, die den Typ der Konfiguration angibt, enthält und die Elemente der dritten Einstellungsspalte mittels der fünften Typspalte in Zahlenwerte umgewandelt werden.

10. Managementsystem (10) zum Managen einer Konfiguration einer Maschinenfunktion, das Folgendes umfasst:
- eine erste Industriemaschine (M1), die hinsichtlich einer Konfiguration der Maschinenfunktion untersucht werden soll,
- mehrere weitere Industriemaschinen (MO), wobei die erste Industriemaschine (M1) mit einem Netzsystem, das die mehreren weiteren Industriemaschinen umfasst, verbindbar ist, und
- ein Konfigurationsanomalie-Detektionsmodul (CADM), das konfiguriert ist, ein Verfahren nach einem der Ansprüche 1 bis 9 durchzuführen.

11. Computerprogrammprodukt mit Programmcodemitteln, die in einem computerlesbaren Medium gespeichert sind, um das Verfahren nach einem der Ansprüche 1-9 durchzuführen, wenn das Computerprogrammprodukt in einem Prozessor einer elektronischen Steuereinheit verarbeitet wird.

## Revendications

1. Procédé informatisé pour gérer la configuration d'une fonction de machine d'une première machine industrielle (M1) qui peut être connectée à un système de réseau qui comprend plusieurs autres machines industrielles (MO) en exécutant les étapes suivantes :
a) l'identification (S1) d'un ensemble (N) des deuxièmes machines industrielles (MS) parmi lesdites plusieurs autres machines industrielles (MO) en se basant sur une caractéristique prédéterminée de la première machine industrielle (M1) dans les plusieurs autres machines industrielles (MO),
b) la récupération et/ou la création (S2) d'une première valeur de configuration, qui se rapporte à la fonction de machine de la première machine industrielle (M1), et d'une deuxième valeur de configuration qui se rapporte à la fonction de machine des deuxièmes machines industrielles (MS),
- chaque valeur de configuration représentant une configuration de la fonction de machine de la première machine industrielle (M1) ou d'une des deuxième machines industrielles (MS),
c) la détermination (S4) d'une valeur d'écart de la fonction de machine de la première machine industrielle (M1) selon un rapport entre la première valeur de configuration de la première machine industrielle (M1) et la deuxième valeur de configuration de l'ensemble (N) de deuxièmes machines industrielles (MS), la détermination de la valeur d'écart de la fonction de machine de la première machine industrielle (M1) comprenant la détermination d'une valeur d'écart séparée pour chaque première valeur de configuration de la fonction de machine de la première machine industrielle (M1) selon le rapport entre ladite chaque première valeur de configuration de la première machine industrielle (M1) et sa deuxième valeur de configuration correspondante des deuxièmes machines industrielles (SM),
d) la détection d'une mauvaise configuration de la première machine industrielle (M1) en se basant sur une comparaison de la valeur d'écart avec une valeur de seuil prédéterminée, la détection de la mauvaise configuration de la fonction de machine de la première machine industrielle (M1) comprenant la comparaison de chaque valeur d'écart avec une valeur de seuil prédéterminée pour identifier la mauvaise configuration qui cause la fonction de machine mal configurée de la première machine industrielle (M1), et
e) l'exécution de la correction de la fonction de machine mal configurée de la première machine industrielle (M1) en utilisant une valeur de configuration correcte.

2. Procédé selon la revendication 1, dans lequel chaque valeur de configuration est attribuée à un vecteur de configuration et chaque vecteur de configuration comprend la valeur de configuration concernant une seule machine industrielle, qui est soit la première machine industrielle (M1), soit une des deuxièmes machines industrielles (MS).

3. Procédé selon l'une quelconque des revendications précédentes, dans lequel la caractéristique prédéterminée de la première machine industrielle (M1) pour identifier l'ensemble (N) des deuxièmes machines industrielles (MS) est basée sur des métadonnées de la première machine industrielle (M1).

4. Procédé selon l'une quelconque des revendications précédentes, comprenant en outre la transformation d'une première ou d'une deuxième valeur de configuration non numérique se rapportant à une fonction de machine non numérique en une valeur numérique lors de l'étape b), en particulier en attribuant la valeur de configuration à valeur non numérique à une valeur binaire ou à une valeur numérique prédéterminée, pour déterminer la valeur d'écart lors de l'étape c).

5. Procédé selon l'une quelconque des revendications précédentes, dans lequel la mauvaise configuration de la fonction de machine associée à la première machine industrielle (M1) est détectée si chaque valeur d'écart séparée est plus grande qu'une valeur de seuil prédéterminée correspondante.

6. Procédé selon la revendication 2, dans lequel une distance euclidienne entre le vecteur de configuration de la première machine industrielle (M1) et toutes les deuxièmes machines industrielles (MS) est calculée pour déterminer la valeur d'écart lors de l'étape c).

7. Procédé selon l'une quelconque des revendications précédentes, dans lequel, lors de l'étape c), une analyse des k plus proches voisins, une analyse de machine à vecteurs de support, un réseau neuronal et/ou une analyse basée sur corrélation sont appliqués aux valeurs de configuration de l'étape b) pour déterminer la valeur d'écart.

8. Procédé selon l'une quelconque des revendications précédentes, ce procédé étant déclenché périodiquement et/ou dans le cas où une nouvelle machine industrielle est connectée au système de réseau.

9. Procédé selon la revendication 4, dans lequel la transformation est basée sur un tableau comprenant une première colonne avec des méta-informations de catégorie, une deuxième colonne de noms, une troisième colonne de paramètres, une quatrième colonne de valeurs de configuration et une cinquième colonne de types indiquant le type de la configuration, les éléments de la troisième colonne de paramètres étant transformés en valeurs numériques au moyen de la cinquième colonne de types.

10. Système de gestion (10) pour gérer la configuration d'une fonction de machine comprenant :
- une première machine industrielle (M1) devant être examinée en ce qui concerne une configuration de la fonction de machine,
- plusieurs autres machines industrielles (MO), la première machine industrielle (M1) pouvant être connectée à un système de réseau comprenant les plusieurs autres machines industrielles, et
- un module de détection d'anomalie de configuration (CADM) qui est configuré de façon à exécuter le procédé selon l'une quelconque des revendications 1 à 9.

11. Progiciel avec des moyens code de programme, qui sont stockés sur un support lisible par ordinateur pour exécuter le procédé selon l'une quelconque des revendications 1 à 9 si ce progiciel est traité sur un processeur d'une unité de commande électronique.
